# EUROPEAN PATENT APPLICATION

(11) **EP 3 747 272 A1**
(43) Date of publication of application: **09.12.2020**
(21) Application number: 20176430.5
(22) Date of filing: 26.05.2020
(51) Int. Cl.: A23D 9/007, A23L 33/15, A23L 33/155

(54) **EDIBLE OIL WITH ADDED VITAMINS**

(30) Priority: 05.06.2019 IT 201900008085
(71) Applicant: Fattoria Petrini di Petrini Francesca, 60037 Monte San Vito (AN) (IT)
(72) Inventor: PETRINI, FRANCESCA, 60037 Monte San Vito (AN) (IT)
(74) Representative: Cutropia, Gianluigi

(57) **Abstract**

Vitamins D2 or D3, B12 and B6 are added to an edible oil. Said edible oil comprises olive oil or seed oil comprising one or more of the following seed oils: corn oil, peanut oil, grape seed oil, sunflower oil, soybean oil, pumpkin oil; said edible oil being in oily form, having high organoleptic features and being used for foods seasoning in a vegetarian/vegan diet.

## Description

The present invention relates to an edible oil with added vitamins, in particular for vegetarian or vegan consumers.

WO2004/066754 discloses an edible oil with added vitamins D3, K1 and B6 which favors the assumption of calcium of a consumer during a daily oil consumption. However, such an edible oil is not suitable for consumers who follow a vegetarian or vegan diet.

A diet can be defined as appropriate when it satisfies the needs of energy and nutrients, both in quantitative and qualitative terms of the consumed foods, respecting the combinations and proportions in such a way to prevent potential health risks. Nevertheless, multiple factors may interfere with a correct intake of nutrients, such as the exclusion of some foods from the (vegetarian/vegan) diet.

The most common consequences are vitamin deficiency or hypovitaminosis, i.e. the total absence or deficiency of one or more vitamins at the same time. Such a phenomenon has been recently observed also in developed countries in groups of vulnerable individuals or populations.

Vitamins are organic substances of different chemical kind that are necessary in small quantities for the cellular metabolism and are therefore indispensable for growth and vital functions. It being impossible for the body to synthesize the majority of them, vitamins must be introduced in the body by means of the intake of foods that are naturally rich in vitamins, fortified foods or food supplements.

A vegetarian diet excludes the consumption of all types of meats and meat by-products. Within such a diet, reference can be made to two diet models, namely the lacto-ovo-vegetarian diet, which excludes the aforementioned foods, and admits cheeses, dairy products and eggs, and the vegan diet, which also excludes the latter foods, only consuming a wide range of vegetable foods.

As shown by literature, the protein intake of vegetarians is adequate, although it is lower than the general population; on the contrary, the vitamin intake, and specifically vitamin B12, is inadequate, especially in vegans who exclude products rich in vitamin B12, such as milk, eggs and by-products, from their diet.

Several studies on the vegan population have demonstrated low vitamin B12 levels and high homocysteine levels. Therefore it is crucial to supplement the vegan diet with B12 vitamin-based food supplements or with foods that contain vitamin B12. The vitamin B12 sources of a vegan diet include a limited number of foods, such as cereal for breakfast, food yeast flakes, bread, nutrient bars, energy drinks and mineral water. Given the important metabolic role of vitamin B12 and the damage that deficiency can cause in the long term, the population who follows a vegan diet is strongly recommended to introduce food supplements or fortified foods in their daily diet in such a way to achieve a recommended daily dose of vitamin B12.

The indications on the integration of vitamin B12 must take into account the bioavailability of the vitamin, the contents of the individual dose and the intake method and frequency. As indicated in the National Recommended Energy and Nutrient Intake Levels for Italy (LARN) (SINU, 2014), the integration of vitamin B12 may include 2-3 intakes (1-2 µg x 2 or 3 times/die) or only 1 intake (5-25-50 µg/die) according to the age group. According to some authors, the recommended daily dose for an adult who follows a vegan diet, regardless of gender, is 6 µg/die vs. 2.4 µg/die in the case of a varied, balanced diet. Some studies have demonstrated that the absorption of the vitamin B12 introduced with the diet is lower than 50% (Roman et al., 2011; Doets et al., 2013; SINU, 2014). The indications that are currently available in literature are to be attributed to cyanocobalamin (CN-Cbl) because no scientific evidence is available on the integration with other chemical forms.

Vitamin B12 is especially important also for women during pregnancy and nursing and for babies after weaning because it intervenes in the cellular replication mechanisms and in the metabolism of fats and proteins.

The deficiency of vitamin B12 is very common also in over-60 individuals. Deficiency percentages of 23-35% of the population are found in over-80 individuals. On the contrary, in a vegetarian/vegan diet, the very high intake of folates may delay the onset of the symptoms related with blood alterations caused by a deficiency of vitamin B12.

However, folates cannot prevent the negative effects, especially for the nervous system, caused by the lack of a sufficient quantity of vitamin B12, although they are essential to support the growth and the normal development of the fetus. For this reason, the guidelines especially recommend its assumption during pregnancy and nursing. Moreover, some studies have shown the importance of folate intake also during the fertile age in order to increase the probability of conception and reduce the probability of developing malformations of the fetus.

Several studies have shown that, being mainly based on vegetables, a vegetarian/vegan diet is especially rich in folates, as well as in omega-6 fatty acids, carotenoids, vitamin C and E, magnesium and iron, whereas it lacks omega-3 fatty acids, vitamin D, calcium, zinc and vitamin B12.

Individuals who exclude foods of animal origin from their diet and are exposed to a limited amount of sunlight do not favor the synthesis of vitamin D3 (colecalciferol) at cutaneous level by means of exposure to UV radiation and suffer from a deficiency of vitamin D3.

However, the vitamin D3 (colecalciferol) that is synthesized at cutaneous level is a vitamin of animal origin and therefore such a vitamin may not be accepted by vegans. On the contrary, ergocalciferol or vitamin D2 is a vitamin of vegetable origin and is defined as a "vegan-friendly" version.

A "vegan-friendly" version of vitamin D3, which is derived from lichens (symbiont organisms derived from the association of an alga and a fungus) has been recently disclosed and marketed.

Although the recommended daily doses of vitamin D3 vary from country to country (15 µg/die in the US vs. 10 µg/die in the UK), values lower than 20 ng/mL are clinically considered as a symptom of deficiency, whereas values comprised between 40 and 70 ng/mL are considered to be optimal.

WO2016/146453 discloses a composition for use in the treatment of neuropathic pain, which comprises palmitoylethanolamide (PEA) and vitamin B. Such a document does not deal with the technical problem of favoring a vegan diet. An example indicates a capsule of extra-virgin olive oil gel with PEA and vitamins B1, B2, B3, B6, B8, B12, D3 and E. In such a case, the only function of the extra-virgin oil is to form a gel to create the capsule and is not suitable for seasoning foods or for being used in a diet.

CN104906136 discloses a composition of vitamins and minerals. Obviously, such a composition is not suitable for a vegan diet because the vegan diet is intrinsically rich in minerals contained in vegetables. The quantity of olive oil, in parts, is half of the minerals, that is to say an insignificant quantity. Therefore the composition is pasty and is not suitable for food seasoning.

CN106035755 and CN106172889 disclose a camelia oil with added vitamins that is used for pregnant women. Camelia oil is substantially different from olive oil and from seed oils that are used for food seasoning and the problem of vegan diets is not considered in these documents.

CN109527122 discloses the extraction of vitamin D2 from mushrooms and does not consider the problem of vegan diets. Such document does not consider the problems related with the possibility of replacing vitamin D2 with vitamin D3 in a vegan diet, with the solubility of vitamin D2 in olive oil or with the compatibility of vitamin D2 with vitamins B3, B6 and B12.

The purpose of the present invention is to eliminate the drawbacks of the prior art by disclosing an edible oil with added vitamins that is especially suitable for a vegan or vegetarian diet.

Another purpose of the present invention is to provide such an edible oil with added vitamins that is suitable for seasoning food, is easy to digest and to use for the consumer.

These purposes are achieved according to the invention with the characteristics of the independent claims 1 and 2.

Advantageous embodiments of the invention appear from the dependent claims.

Vitamins D2 or D3, B12 and B6 are added to the edible oil of the invention.

The expression "edible oil" refers to an olive oil or a seed oil, such as corn oil, peanuts oil, grape seed oil, sunflower oil, pumpkin oil, with high nutritional and organoleptic properties, which is oily, is a food with high nutritional and organoleptic properties and is suitable for food seasoning. Preferably, extra-virgin olive oil is used. However, an olive oil or a seed oil comprising a combination of the following seed oils can be used: corn oil, peanut oil, grape seed oil, sunflower oil, soybean oil and pumpkin oil.

Extra-virgin olive oil is one of the main ingredients of the Mediterranean diet and several scientific studies have shown the beneficial effects generated by a regular, balanced consumption. As a matter of fact, it has been demonstrated that, because of its high content of monounsaturated fatty acids (MUFA), extra-virgin olive oil protects the plasmatic membranes from oxidative damage in a higher extent than seed oils, which are rich in polyunsaturated fatty acids. Moreover, several studies have shown that the compliance with the Mediterranean diet, which finds its main fat source in extra-virgin olive oil, is associated with improved health conditions, longevity increase, reduced risk of cardiovascular disease, cancer or neurodegenerative disease, such as Parkinson and Alzheimer's disease. In addition to being attributed to the MUFA, these benefits are related with the presence of several bioactive compounds, such as polifenols, tocoferols and terpenoids.

For the aforementioned reasons and for the fact that extra-virgin olive oil is a food of vegetable origin that is present in vegetarian and vegan diets, extra-virgin olive oil has proved to be an ideal matrix to carry vitamins D2 or D3, B12 and B6.

Extra-virgin olive oil is consumed daily. Since no temperature treatment is necessary for its use, extra-virgin olive oil maintains the integrity and the biological functionality of vitamins. In view of the way it is used, extra-virgin olive oil does not need a reminder in order to be introduced in the diet, as it often occurs for food supplements in pills.

Vitamin D2 comprises ergocalciferol. Vitamin D3 generally comprises calciferol. Since calciferol is of animal origin, a vitamin D3 of vegetable origin obtained from lichen extracts can be alternatively used.

Vitamin B12 comprises cobalamin.

Vitamin B6 comprises pyridoxine.

The three vitamins D2/D3, B12 and B6 play a crucial role in several metabolic functions that are useful to maintain a correct metabolism and health status of the body in all age groups.

For its liposoluble nature, vitamin D2 can be easily dissolved in the fatty matrix of oil.

The data available in literature have demonstrated that individuals who follow a vegetarian/vegan diet have a deficiency of vitamin B12, and a satisfactory intake of vitamin B9, omega-6 fatty acids, carotenoids, vitamin C and E, magnesium and iron and a deficiency of omega-3 fatty acids, vitamin D, calcium, zinc and vitamin B12.

According to the IV and last revision of the National Recommended Energy and Nutrient Intake Levels for Italy (LARN) (2014), no contraindications exist on the excessive intake of vitamin B12, whereas maximum acceptable levels in the intake of vitamins B9, B6 and vitamin D have been scientifically identified in almost all age groups.

Based on the scientific investigations illustrated in this description, no deficiency of vitamin B9 is found in the vegetarian/vegan population. Therefore, the formulation according to the invention does not provide for vitamin B9 in order to support the nutritional deficiencies of individuals who follow a vegetarian/vegan diet.

The quantities of vitamins D2/D3, B12 and B6 to be added to edible olive oil are calculated taking into account the bioavailability and the fortification technology, in such a way that the consumption of extra-virgin olive oil permits to achieve the daily recommended dose for an adult, namely:
- approximately 15 µg/die for vitamin D2 or D3;
- approximately 4-6 µg/die for vitamin B12, and
- approximately 1.3 mg/die for vitamin B6.

Table 1 contains the formulation of vitamins in one liter of oil.

**Table 1**

| VITAMIN | QUANTITY (by weight) |
|---|---|
| Vitamin D3 (colecalciferol or lichens) | 500 µg |
| Vitamin D2 (ergocalciferol) | 500 µg |
| Vitamin B12 (cobalamin) | 200 µg |
| Vitamin B6 (pyridoxine) | 60 mg |

Said quantities of vitamins have been studied in order to achieve the recommended daily dose with approximately two spoonfuls of oil, considering that a spoonful of oil is approximately 10-15 ml.

The formulation of Table 1 is an optimal formulation; evidently, such a formulation may suffer variations according to the consumer's needs.

For illustration purposes, Table 2 indicates some ranges with respect to the optimal values of Table 1.

**Table 2**

| VITAMIN | QUANTITY (by weight) |
|---|---|
| Vitamin D3 (colecalciferol or lichens) | 200 - 1500 µg |
| Vitamin D2 (ergocalciferol) | 200 - 1500 µg |
| Vitamin B12 (cobalamin) | 100 - 500 µg |
| Vitamin B6 (pyridoxine) | 10 - 100 mg |

In terms of intestinal absorption and assimilation of nutrients, it is important to use olive oil as carrier for said vitamins, instead of food supplements (i.e. pills, tablets, drops, etc.). In fact, with respect to other vegetable and animal fats, olive oil, and especially extra-virgin olive oil, has the highest intestinal utilization coefficient that indicates the percentage of a food that is absorbed by the intestine.

Table 3 indicates the intestinal utilization coefficients of some foods.

**Table 3**

| FOOD | Intestinal utilization coefficient |
|---|---|
| Virgin olive oil | 96% |
| Refined olive oil | 92% |
| Animal fats | 83% |

The efficacy of olive oil as carrier of additional substances, such as the aforementioned vitamins, is evident.

The importance of an adequate intake of vitamin B6 in a vegan diet is related with the role played on the cellular metabolism of homocisteine in synergy with vitamin B12, helping the body to control the plasmatic levels and prevent the onset of cardiovascular disease. Moreover, as shown in a study of 2012 (Zhao et al., 2012), in order to induce a marginal deficiency of vitamin B6, a short-term diet restriction of vitamin B6 determines a plasmatic reduction of omega 3 and omega 6 concentration and an increase of the omega 6/omega 3 ratio; said alterations of the lipidic component of blood might be associated with a high risk of onset of cardiovascular disease, in the lack of vitamin B6.

## Claims

1. Edible oil with added vitamins D2, B12 and B6, wherein said edible oil comprises olive oil or seed oil comprising one or more of the following seed oils: corn oil, peanuts oil, grape seed oil, sunflower oil, soybean oil, pumpkin oil; said edible oil being in oily form, being a food with high nutritional and organoleptic characteristics, and being suitable for seasoning foods.

2. Edible oil with added vitamins D3, B12 and B6, wherein said edible oil comprises olive oil or seed oil comprising one or more of the following seed oils: corn oil, peanut oil, grape seed oil, sunflower oil, soybean oil, pumpkin oil; said edible oil being in oily form, being a food with high nutritional and organoleptic characteristics, and being suitable for seasoning foods.

3. The edible oil of claim 1, wherein Vitamin D2 comprises ergocalciferol.

4. The edible oil of claim 2, wherein Vitamin D3 comprises calciferol.

5. The edible oil of claim 2, wherein Vitamin D3 comprises lichen extracts.

6. The edible oil of any one of the preceding claims, wherein Vitamin B12 comprises cobalamin.

7. The edible oil of any one of the preceding claims, wherein Vitamin B6 comprises pyridoxine.

8. The edible oil of any one of the preceding claims, wherein said edible oil is extra-virgin olive oil.

9. The edible oil of claim 1 and of any one of claims 3 to 8, wherein Vitamin D2 is contained in a range of 200 - 1500 µg in one liter of olive oil.

10. The edible oil of any one of claims 2 to 8, wherein Vitamin D3 is contained in a range of 200 - 1500 µg in one liter of olive oil.

11. The edible oil of any one of the preceding claims, wherein Vitamin B12 is contained in a range of 100 - 500 µg in one liter of olive oil.

12. The edible oil of any one of the preceding claims, wherein Vitamin B6 is contained in a range of 10 - 100 mg in one liter of olive oil.

13. Use of an edible oil according to anyone of the precedent claims, for food seasoning of foods in a vegan or vegetarian diet.
